# EUROPEAN PATENT SPECIFICATION

(11) **EP 3 988 349 B1**
(45) Date of publication and mention of the grant of the patent: **05.03.2025**
(21) Application number: 20826618.9
(22) Date of filing: 19.06.2020
(51) Int. Cl.: B60C 19/08, B60C 9/00, B60C 15/00, B60C 15/06

(54) **TIRE**
REIFEN
PNEUMATIQUE

(30) Priority: 21.06.2019 JP 2019115377
(43) Date of publication of application: 27.04.2022
(73) Proprietor: BRIDGESTONE CORPORATION, Chuo-ku Tokyo 104-8340 (JP)
(72) Inventor: FUKUZAWA Kazuyuki, Tokyo 104-8340 (JP)
(74) Representative: Marks & Clerk LLP
(86) International application number: PCT/JP2020/024196
(87) International publication number: WO 2020/256128

(56) References cited:
- EP-A1- 3 403 855
- WO-A1-2008/044288
- WO-A1-2009/022564
- WO-A1-2014/109169
- WO-A1-2014/173551
- WO-A1-2017/208852
- JP-A- 2012 131 100
- JP-A- 2013 049 382
- JP-A- 2014 125 005
- JP-A- 2019 081 401
- US-A1- 2010 078 103
- US-B2- 9 409 448

## Description

### [Technical Field]

The present invention relates to a tire.

Priority is claimed on Japanese Patent Application No. 2019-115377, filed June 21, 2019.

### [Background Art]

For example, as described in Patent Document 1, a tire having a carcass ply is known.

US2010078103 discloses a pneumatic tire that can be manufactured according to the conventional method without requiring special tire manufacturing steps and without needing addition of material members and production steps, and having excellent rolling resistance and wet properties, and having conductivity is to be provided. A pneumatic tire comprises a carcass having a ply which is turned back and locked around a bead core, a rim strip provided in a bead part, and a wing in which one edge thereof is contacted with the carcass and the other edge is exposed to the surface of a ground contact edge region of a tread part, wherein a covering rubber of a carcass ply, the rim strip and the wing are formed into a continuous conductive path by a conductive rubber material, only the conductive path is used as a conducting path of the tire, and members other than the conducting path are selected and used from a conductive rubber material or a nonconductive rubber material.

US9409448 discloses a pneumatic tire that has a carcass ply and a side wall rubber provided in outer sides of the carcass ply. The carcass ply has joint portions obtained by overlapping end portions of ply members so as to join. At least one of the joint portions is provided with a rubber tape. The rubber tape is interposed between the end portions of the ply members and is exposed to a surface of the carcass ply. A topping rubber of the carcass ply and the side wall rubber are formed by a nonconductive rubber. The rubber tape is formed by a conductive rubber. A conductive route getting to the rubber tape from a ground-contacting surface is formed in a tread portion. A conductive route getting to the rubber tape from an outer surface of a bead portion is formed in the bead portion.

EP3403855 discloses a pneumatic tire comprising a carcass as a skeletal structure composed of at least one carcass ply extending toroidally between a pair of bead portions, at least one layer of a belt located on the outer side of the carcass in the tire radial direction of the crown portion. The tire is provided with a cushion rubber and a tread rubber forming a tread portion in turn on the outer side of the belt in the tire radial direction, and a composite fiber containing a conductive fiber and a non-conductive fiber is extended at least from the pair of bead portions to portions in contact with the cushion rubber or a pair of belt under cushions, so as to expose the composite fiber to both surfaces of the carcass at the outer and inner sides of the tire.

WO2014173551 discloses a vehicle pneumatic tire having a carcass with at least one carcass layer, the surface of which has a support made of electrically conductive material, and a method for manufacturing such a vehicle pneumatic tire. The object is to make available a vehicle pneumatic tire and a method for manufacturing same, the electrical conductivity of which tire is reliably ensured with simple means and simple structural design. The object is achieved in that the support is an electrically conductive rubber mixture and extends continuously on the surface of the carcass layer from an electrically conductive bead base as far as the superstructure and makes contact therewith. The method has the following steps: a) manufacturing the carcass layer, b) covering a surface of the carcass layer with a continuous support made of an electrically conductive rubber mixture, wherein the support in the finished vehicle pneumatic tire makes contact with an electrically conductive bead base and the superstructure.

### [Citation List]

### [Patent Document]

[Patent Document 1]
Japanese Unexamined Patent Application, First Publication No. 2015-20499

### [Summary of Invention]

### [Technical Problem]

In the tire, reduction of rolling resistance is required. In order to reduce the rolling resistance, for example, an amount of carbon contained in a carcass rubber in a carcass ply may be reduced. However, when the amount of carbon contained in the carcass rubber is reduced, the volume resistivity of the carcass rubber increases, and a conductive path from a bead portion to a tread surface portion may be blocked by the carcass ply. Therefore, it may be difficult for static electricity transmitted from a vehicle to the bead portion to be released from the tread surface portion to the ground.

One aspect of the present invention is made in view of the above circumstances, and an object thereof is to provide a tire having a structure in which static electricity from a vehicle is easily released to the ground regardless of conductivity of a carcass ply.

### [Solution to Problem]

According to a first aspect of the present invention there is provided a tire as specified in claim 1.

### [Advantageous Effects of Invention]

According to one aspect of the present invention, it is possible to provide a tire having a structure in which static electricity from a vehicle is easily released to the ground regardless of conductivity of a carcass ply.

### [Brief Description of Drawings]

Fig. 1 is a cross-sectional view schematically showing a portion of a tire of an embodiment, and is a cross-sectional view taken along a tire width direction.
Fig. 2 is a cross-sectional view schematically showing a portion of the tire of the embodiment, and is a partially enlarged view of Fig. 1.
Fig. 3 is a cross-sectional view schematically showing a portion of the tire of the embodiment, and is a cross-sectional view taken along line III-III in Fig. 2.

### [Description of Embodiments]

Hereinafter, a tire according to an embodiment of the present invention will be described with reference to the drawings. Further, in the following drawings, a scale and a number of each structure may be different from a scale and a number of an actual structure in order to make each configuration easy to understand.

A Z-axis direction shown in each drawing is a direction parallel to a tire radial direction centered on a rotation axis of a tire 10. In each drawing, the tire radial direction is an up-down direction. In a portion of the tire 10 shown in each drawing, a positive side in the Z-axis direction, that is, an upper side in each drawing is an outside in the tire radial direction, and a negative side in the Z-axis direction, that is, a lower side in each drawing is an inside in the tire radial direction.

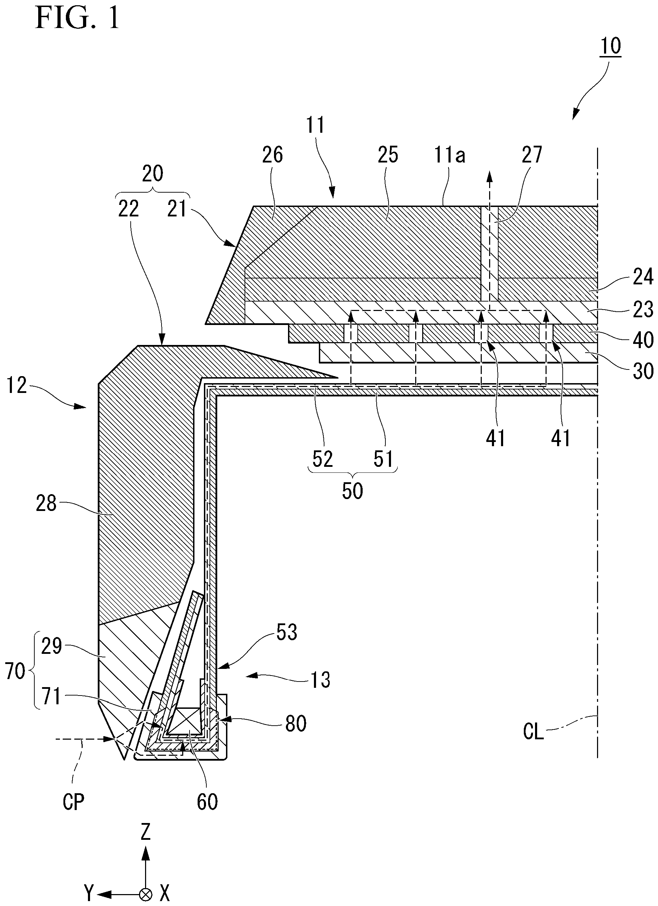

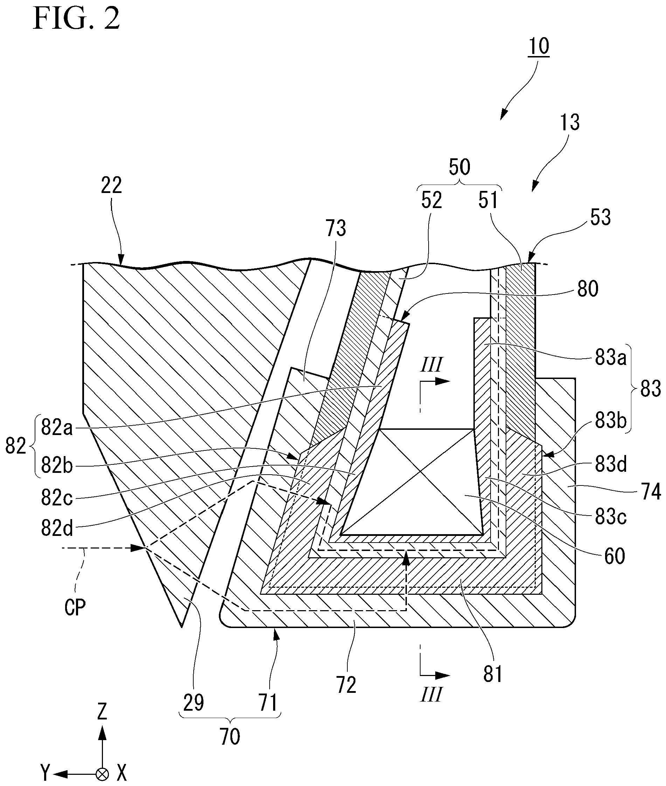

A Y-axis direction shown in each drawing is a direction parallel to a tire width direction. In Figs. 1 and 2, the tire width direction is a left-right direction. In the following description, for a certain object, a side closer to a tire equatorial portion CL in the tire width direction is referred to as an "inside in the tire width direction", and a side far from the tire equatorial portion CL in the tire width direction is referred to as an "outside in the tire width direction". The tire equatorial portion CL is a center in the tire width direction of the tire 10 of the present embodiment. In a portion of the tire 10 shown in each drawing, a negative side in the Y-axis direction, that is, for example, a right side in Figs. 1 and 2 is an inside in the tire width direction, and a positive side in the Y-axis direction, that is, for example, a left side in Figs. 1 and 2 is an outside in the tire width direction.

Further, a circumferential direction around a central axis (not shown) of the tire 10 is referred to as a tire circumferential direction. The X-axis direction shown in each drawing is a direction orthogonal to both the Z-axis direction and the Y-axis direction, and is the circumferential direction in the cross section of the tire 10 shown in each drawing.

Fig. 1 shows a portion of the tire 10 located on one side of the tire equatorial portion CL in the tire width direction in a cross section of a portion of the tire 10 in the tire circumferential direction. In the cross section of the portion of the tire 10 in the tire circumferential direction, a portion located on the other side of the tire equatorial portion CL in the tire width direction is disposed symmetrically with the portion shown in Fig. 1 in the tire width direction in a state where the tire equatorial portion CL is interposed therebetween. In the following description, the portion of the tire 10 shown in Fig. 1 will be described, and the portion of the tire 10 located on the other side of the tire equatorial portion CL in the tire width direction may be omitted.

As shown in Fig. 1, the tire 10 of the invention includes a tread portion 11, a sidewall portion 12, and a bead portion 13.

The tread portion 11 is disposed outside the bead portion 13 in the tire radial direction, and is located at an outer end portion of the tire 10 in the tire radial direction. The tread portion 11 has an annular shape extending in the tire circumferential direction. The tread portion 11 has a tread surface portion 11a which is a ground contact surface of the tire 10. The tread surface portion 11a is a portion of an outer surface of the tread portion 11 in the tire radial direction.

For example, the tread surface portion 11a is the ground contact surface of the tread portion 11 in a state where the tire 10 is mounted on a standard rim specified in "JATMA Year Book", and the tire 10 is filled with the internal pressure (hereinafter, referred to as a specified internal pressure) of 100% of an air pressure (maximum air pressure) corresponding to a maximum load capacity (internal pressure - bold load of load capacity correspondence table) in an applicable size and ply rating in "JATMA Year Book" so that a maximum load corresponding to the maximum load capacity is applied.

For example, when the tire 10 is produced or used in a region other than Japan, the tread surface portion 11a is a ground contact surface of the tread portion 11 of the tire 10 based on an industrial standard (for example, "TRA Year Book" in the United States, "ETRTO Standard Manual" in Europe, or the like) applied to the region other than Japan.

The sidewall portion 12 extends inward in the tire radial direction from an outer end portion of the tread portion 11 in the tire width direction. The sidewall portion 12 connects the outer end portion of the tread portion 11 in the tire width direction and the bead portion 13.

The bead portion 13 is connected to an inner end portion of the sidewall portion 12 in the tire radial direction. A bead core 60 is provided in the bead portion 13. More specifically, the bead core 60 is embedded in the bead portion 13.

The tire 10 includes a carcass layer 50 which serves as a skeleton. For example, the tire 10 is formed by assembling a first chafer portion 71, a tire body 20, a belt layer 30, and a belt reinforcing layer 40 to the carcass layer 50. The carcass layer 50 is provided so as to extend over the tread portion 11, the sidewall portion 12, and the bead portion 13. The carcass layer 50 has an annular shape extending in the tire circumferential direction. As shown in Figs. 1 and 2, the carcass layer 50 has a carcass ply 51 and a conductive portion 52.

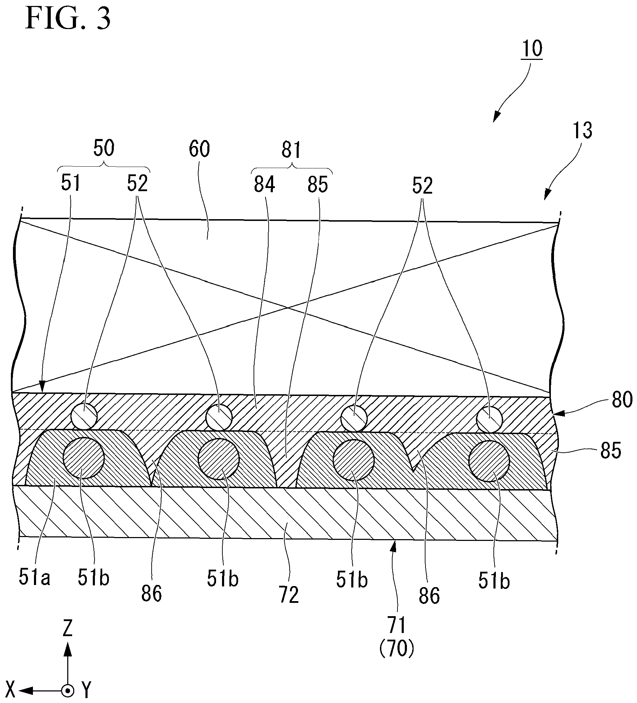

The carcass ply 51 covers at least a portion of the bead core 60 around a core axis of the bead core 60. The carcass ply 51 in the present embodiment extends from the tread portion 11 to the bead portion 13 via the sidewall portion 12 and is folded outward in the tire width direction around the bead core 60. The carcass ply 51 has an annular shape extending in the tire circumferential direction. As shown in Fig. 3, the carcass ply 51 has a carcass rubber 51a and a plurality of ply cords 51b. The carcass ply 51 is formed by embedding the plurality of ply cords 51b in the carcass rubber 51a.

In the following description, an inner surface of surfaces of the carcass ply 51 is referred to as a "first surface", and an outer surface of the surfaces of the carcass ply 51 is referred to as a "second surface". In the tread portion 11, the first surface is a surface of the surfaces of the carcass ply 51 located inside in the tire radial direction. In the tread portion 11, the second surface is a surface of the surfaces of the carcass ply 51 located outside in the tire radial direction.

In the present embodiment, the loss tangent tan δ of the carcass rubber 51a is relatively small. The smaller the amount of carbon contained in the carcass rubber 51a, the smaller the loss tangent tan δ. The smaller the loss tangent tan δ of the carcass rubber 51a, the smaller the rolling resistance of the tire 10. In the present embodiment, the carcass rubber 51a is relatively difficult to conduct electricity. As a result, the conductivity of the carcass ply 51 in the present embodiment is relatively low.

Each of the plurality of ply cords 51b extends from the tread portion 11 to the bead portion 13 via the sidewall portion 12 and are folded outward in the tire width direction around the bead core 60 in a state of being embedded in the carcass rubber 51a. The plurality of ply cords 51b are disposed at intervals in the tire circumferential direction. For example, the ply cord 51b is an organic fiber cord or the like.

The conductive portion 52 is provided on the outer surface, that is, on the second surface, of the carcass ply 51. As shown in Fig. 1, the conductive portion 52 extends along the carcass ply 51. In the tread portion 11, the conductive portion 52 is located outside the carcass ply 51 in the tire radial direction. In the present embodiment, the conductive portion 52 extends from the tread portion 11 to at least the inside of the bead core 60 in the tire radial direction. In the present embodiment, the conductive portion 52 extends from the tread portion 11 to the bead portion 13 via the sidewall portion 12, is folded outward in the tire width direction around the bead core 60, and extends to the outside of the bead core 60 in the tire width direction.

An outer end portion in the tire radial direction of a portion of the conductive portion 52 folded around the bead core 60 is disposed at the same position in the tire radial direction as an outer end portion in the tire radial direction of a portion of the carcass ply 51 folded around the bead core 60. At least a portion of the conductive portion 52 is located between the carcass ply 51 and the bead core 60. In the present embodiment, a portion of the conductive portion 52 located inside the bead core 60 in the tire radial direction and portions of the conductive portion 52 located on both sides of the bead core 60 in the tire width direction are located between the carcass ply 51 and the bead core 60. In the present embodiment, the conductive portion 52 is connected to a conductive rubber portion 80 to be described later. As shown in Fig. 3, on the inside of the bead core 60 in the tire radial direction, the plurality of conductive portions 52 are attached to the outer surface of the carcass rubber 51a in the tire radial direction.

In the present embodiment, the conductive portion 52 is a thread member containing a metal. For example, the conductive portion 52 is a conductive thread in which a metal fiber such as stainless steel is wound around an organic fiber. The plurality of conductive portions 52 are disposed at intervals in the tire circumferential direction.

Fig. 3 shows, as an example, a state in which the plurality of conductive portions 52 are located outside the plurality of ply cords 51b in the tire radial direction, but the present invention is not limited to this. A positional relationship between the plurality of conductive portions 52 and the plurality of ply cords 51b in the tire circumferential direction is not particularly limited. That is, in Fig. 3, the position of the conductive portion 52 in the left-right direction may deviate from the position of the ply cord 51b in the left-right direction. Further, the number of the conductive portions 52 and the number of the ply cords 51b may be the same or different.

The conductive portion 52 has conductivity. The volume resistivity of the conductive portion 52 is smaller than the volume resistivity of the conductive rubber portion to be described later. In the present specification, "a member has conductivity" and "a member is relatively easy to conduct electricity" may mean that the volume resistivity of a member is low enough to allow static electricity from the vehicle to flow.

The first chafer portion 71 has conductivity. The first chafer portion 71 is a rubber member or a composite member of fibers and rubber. As shown in Fig. 2, the first chafer portion 71 covers a portion of the carcass ply 51 provided in the bead portion 13 from inside in the tire radial direction and from both sides in the tire width direction. The portion of the carcass ply 51 provided in the bead portion 13 includes a portion of the carcass ply 51 that covers the bead core 60 from an inside in the tire radial direction and from both sides in the tire width direction. In the following description, the portion of the carcass ply 51 provided in the bead portion 13 is defined as a core covering portion 53. The core covering portion 53 extends from the inside of the bead core 60 in the tire width direction to the outside of the bead core 60 in the tire width direction through the inside of the bead core 60 in the tire radial direction. The first chafer portion 71 has an annular shape extending in the tire circumferential direction.

The first chafer portion 71 has a radial covering portion 72 and widthwise covering portions 73 and 74. The radial covering portion 72 is a portion that covers the core covering portion 53 of the carcass ply 51 from the inside in the tire radial direction. The radial covering portion 72 extends in the tire width direction. The widthwise covering portions 73 and 74 are portions that cover the core covering portion 53 of the carcass ply 51 from both sides in the tire width direction. The widthwise covering portion 73 extends from an outer end portion of the radial covering portion 72 in the tire width direction to the outside in the tire radial direction, and covers the core covering portion 53 from the outside in the tire width direction. The widthwise covering portion 74 extends from an inner end portion of the radial covering portion 72 in the tire width direction to the outside in the tire radial direction, and covers the core covering portion 53 from the inside in the tire width direction. The outer end portions of the widthwise covering portions 73 and 74 in the tire radial direction are located on an inner side in the tire radial direction than the outer end portion in the tire radial direction of the portion of the carcass ply 51 folded around the bead core 60.

As shown in Fig. 1, the tire body 20 has a tread rubber 21 and a sidewall rubber 22.

The tread rubber 21 is a portion forming a portion of the tread portion 11, and has an annular shape extending in the tire circumferential direction. The tread rubber 21 is provided outside the carcass layer 50 in the tire radial direction. The tread rubber 21 is connected to the carcass layer 50 via the belt layer 30 and the belt reinforcing layer 40. In Fig. 1, in order to show each portion schematically in an easy-to-understand manner, the carcass layer 50 is shown apart from the tread rubber 21, the belt layer 30, and the belt reinforcing layer 40.

The tread rubber 21 has a tread under cushion 23, a base layer 24, a cap layer 25, a mini side 26, and an antenna rubber 27.

The tread under cushion 23, the base layer 24, and the cap layer 25 are laminated in this order from the inside in the tire radial direction to the outside in the tire radial direction. An outer surface of the cap layer 25 in the tire radial direction constitutes the tread surface portion 11a. The mini side 26 is connected to outer end portions in the tire width direction of the laminated tread under cushion 23, the base layer 24 and the cap layer 25.

The antenna rubber 27 is embedded in the base layer 24 and the cap layer 25. The antenna rubber 27 penetrates the base layer 24 and the cap layer 25 in the tire radial direction. An inner end portion of the antenna rubber 27 in the tire radial direction is connected to the outer surface of the tread under cushion 23 in the tire radial direction. An outer end portion of the antenna rubber 27 in the tire radial direction is exposed on the outer surface of the cap layer 25 in the tire radial direction, and forms a portion of the tread surface portion 11a. The antenna rubber 27 may extend intermittently, may extend continuously, or may be scattered in the tire circumferential direction.

The base layer 24, the cap layer 25, and the mini side 26 are relatively difficult to conduct electricity and have low conductivity. The tread under cushion 23 and the antenna rubber 27 are relatively easy to conduct electricity and have conductivity.

The sidewall rubber 22 is a portion forming a portion of the sidewall portion 12 and a portion of the bead portion 13, and has an annular shape extending in the tire circumferential direction. The sidewall rubber 22 is provided outside the carcass layer 50 in the tire width direction. The sidewall rubber 22 is connected to the carcass layer 50. The outer end portion of the sidewall rubber 22 in the tire radial direction is connected to the outer end portion of the tread rubber 21 in the tire width direction. In Fig. 1, in order to show each portion schematically in an easy-to-understand manner, the sidewall rubber 22 and the carcass layer 50 are shown apart from each other, and the sidewall rubber 22 and the tread rubber 21 are shown apart from each other.

The sidewall rubber 22 has a sidewall rubber main body portion 28 and a second chafer portion 29.

The sidewall rubber main body portion 28 is a portion forming a portion of the sidewall portion 12. An outer end portion of the sidewall rubber main body portion 28 in the tire radial direction extends inward in the tire width direction and is located between the carcass layer 50 and the tread rubber 21, the belt layer 30, and the belt reinforcing layer 40.

The second chafer portion 29 is a portion forming a portion of the bead portion 13. The second chafer portion 29 is connected to an inner end portion of the sidewall rubber main body portion 28 in the tire radial direction. The second chafer portion 29 covers the core covering portion 53 of the carcass layer 50 from the outside in the tire width direction. The second chafer portion 29 is connected to the core covering portion 53 and the widthwise covering portion 73 of the first chafer portion 71 from the outside in the tire width direction. In addition, in Figs. 1 and 2, in order to show each portion in an easy-to-understand manner, the second chafer portion 29 and the core covering portion 53 are shown apart from each other, and the second chafer portion 29 and the widthwise covering portion 73 are shown apart from each other.

The volume resistivity of a rubber material constituting the sidewall rubber main body portion 28 is different from the volume resistivity of a rubber material constituting the second chafer portion 29. The sidewall rubber main body portion 28 is relatively difficult to conduct electricity. The second chafer portion 29 is relatively easy to conduct electricity and has conductivity.

In the present embodiment, the first chafer portion 71 and the second chafer portion 29 constitute a chafer portion 70. That is, in the present embodiment, the tire 10 has the chafer portion 70 that covers at least a portion around the carcass ply 51. In the present embodiment, the chafer portion 70 covers at least the inside of the core covering portion 53 in the tire radial direction and the outside of the core covering portion 53 in the tire width direction. The chafer portion 70 has conductivity. In the chafer portion 70, the volume resistivity of the first chafer portion 71 and the volume resistivity of the second chafer portion 29 may be the same as each other or may be different from each other. In the present embodiment, the chafer portion 70 covers the inside of the core covering portion 53 in the tire radial direction and both sides of the core covering portion 53 in the tire width direction, and is connected to the core covering portion 53. The chafer portion 70 is a portion that protects the carcass layer 50 from friction with a rim to which the tire 10 is attached.

The belt layer 30 is embedded in the tread portion 11. The belt layer 30 is laminated on the outer side of the carcass layer 50 in the tire radial direction. The belt layer 30 is connected to the carcass ply 51 and the conductive portion 52. The belt layer 30 is located between the tread rubber 21 and the carcass layer 50 in the tire radial direction. Although not shown, the belt layer 30 is formed by embedding a plurality of steel cords in a belt rubber. The belt rubber of the belt layer 30 is relatively easy to conduct electricity and has conductivity. As a result, the belt layer 30 has conductivity.

The belt reinforcing layer 40 is laminated on the outer side of the belt layer 30 in the tire radial direction. The belt reinforcing layer 40 is located between the tread rubber 21 and the belt layer 30 in the tire radial direction. An outer surface of the belt reinforcing layer 40 in the tire radial direction is connected to an inner surface of the tread under cushion 23 of the tread rubber 21 in the tire radial direction.

The belt reinforcing layer 40 is formed by, for example, winding a composite cord, which is made of rubber and nylon, around an outer peripheral portion of the belt layer 30 a plurality of times. The winding rolls of the composite cord constituting the belt reinforcing layer 40 are disposed to be separated from each other with gaps 41 in the tire width direction. Although not shown, in the gap 41 between the winding rolls of the belt reinforcing layer 40, the tread under cushion 23 and the belt layer 30, between which the belt reinforcing layer 40 is interposed in the tire radial direction, are connected to each other. The belt reinforcing layer 40 is relatively difficult to conduct electricity.

As shown in Fig. 2, the conductive rubber portion 80 is provided in the bead portion 13. The conductive rubber portion 80 is relatively easy to conduct electricity and has conductivity. The volume resistivity of the conductive rubber portion 80 is smaller than the volume resistivity of the carcass rubber 51a. For example, the volume resistivity of the conductive rubber portion 80 is smaller than the volume resistivity of the first chafer portion 71 and the volume resistivity of the second chafer portion 29. For example, the volume resistivity of the conductive rubber portion 80 is different from the volume resistivity of other rubber materials constituting the bead portion 13.

The volume resistivity of the conductive rubber portion 80 may be the same as the volume resistivity of the first chafer portion 71 and the volume resistivity of the second chafer portion 29, or may be larger than the volume resistivity of the first chafer portion 71 and the volume resistivity of the second chafer portion 29.

The conductive rubber portion 80 is provided between the carcass ply 51 and the bead core 60. The conductive rubber portion 80 is disposed so as to penetrate the core covering portion 53 and extend from the inside of the core covering portion 53 to the outside of the core covering portion 53. The conductive rubber portion 80 has an annular shape extending in the tire circumferential direction. The conductive rubber portion 80 has a first portion 81, a second portion 82, and a third portion 83.

The first portion 81 is located inside the bead core 60 in the tire radial direction. That is, the first portion 81 is provided inside in the tire radial direction from the outer end portion of the bead core 60 in the tire radial direction. As a result, at least a portion of the conductive rubber portion 80 is provided inside in the tire radial direction from the outer end portion of the bead core 60 in the tire radial direction. The first portion 81 extends in the tire width direction. The first portion 81 is disposed so as to penetrate the carcass layer 50 in the tire radial direction. An outer end portion of the first portion 81 in the tire radial direction is in contact with the bead core 60. An inner end portion of the first portion 81 in the tire radial direction is connected to the first chafer portion 71. More specifically, the inner end portion of the first portion 81 in the tire radial direction is connected to the radial covering portion 72 of the first chafer portion 71. As shown in Fig. 3, the first portion 81 has a base portion (intervening portion) 84, a penetrating portion (embedded portion) 85, and a non-penetrating portion (embedded portion) 86.

The base portion 84 is laminated on the outer side of the carcass ply 51 in the tire radial direction. The conductive portion 52 is embedded in the base portion 84. As a result, the first portion 81 is connected to the conductive portion 52. In the present embodiment, the base portion 84 corresponds to the intervening portion located between the bead core 60 and the carcass ply 51.

The penetrating portion 85 extends inward in the tire radial direction from the base portion 84. For example, a plurality of penetrating portions 85 are disposed in the tire circumferential direction. The penetrating portion 85 penetrates, in the tire radial direction, a portion of the carcass rubber 51a located between the ply cords 51b. In the present embodiment, the penetrating portion 85 divides the carcass rubber 51a in the tire circumferential direction. An inner end portion of the penetrating portion 85 in the tire radial direction is connected to the radial covering portion 72 of the first chafer portion 71. The dimension of the penetrating portion 85 in the tire radial direction is larger than the dimension of the base portion 84 in the tire radial direction. The penetrating portion 85 penetrates the carcass ply 51 from the second surface to the first surface of the carcass ply 51. That is, the penetrating portion 85 penetrates the carcass ply 51 in a thickness direction. As a result, the conductive rubber portion 80 penetrates the first surface and the second surface of the carcass ply 51.

In the present embodiment, the penetrating portion 85 corresponds to the embedded portion embedded in the carcass ply 51. More specifically, in the present embodiment, the penetrating portion 85 corresponds to a first embedded portion embedded in a portion of the carcass ply 51 located inside the bead core 60 in the tire radial direction. In the present embodiment, the penetrating portion 85, which is the embedded portion, is located between the ply cords 51b. In the present specification, "the embedded portion is embedded in the carcass ply" includes that the embedded portion is embedded in the carcass rubber of the carcass ply. The penetrating portion 85, which is the embedded portion in the present embodiment, is embedded in the carcass rubber 51a.

The non-penetrating portion 86 extends inward in the tire radial direction from the base portion 84. The non-penetrating portion 86 is embedded in a portion of the carcass rubber 51a located between the ply cords 51b. An inner end portion of the non-penetrating portion 86 in the tire radial direction does not reach the radial covering portion 72. That is, the non-penetrating portion 86 does not penetrate the carcass rubber 51a.

As described above, on the inside of the bead core 60 in the tire radial direction, the first portion 81 connects the conductive portion 52 and the first chafer portion 71 to each other, and thus, the conductive rubber portion 80 disposed inside the bead core 60 in the tire radial direction penetrates the carcass ply 51 in the tire radial direction and connects the conductive portion 52 and the chafer portion 70 to each other. Further, the conductive rubber portion 80 penetrates, in the tire radial direction, the portion of the carcass ply 51 between the ply cords 51b adjacent to each other in the tire circumferential direction to connect the conductive portion 52 and the chafer portion 70 to each other. As a result, the conductive rubber portion 80 of the present embodiment conducts electricity between the first surface and the second surface of the carcass ply 51.

In the present specification, "the conductive rubber portion conducts electricity between the first surface and the second surface of the carcass ply" is not particularly limited as long as the conductive rubber portion conducts electricity from the first side of the carcass ply in the thickness direction to the second side of the carcass ply in the thickness direction, and may include a case where static electricity from the vehicle does not flow to the first surface and the second surface of the carcass ply. For example, in the present embodiment, static electricity from the vehicle does not flow to the carcass ply 51 itself, but flows from the chafer portion 70 located on the first side of the carcass ply 51 in the thickness direction to the conductive portion 52 located on the second side of the carcass ply 51 in the thickness direction via the conductive rubber portion 80.

As shown in Fig. 2, the second portion 82 is located outside the bead core 60 in the tire width direction. The second portion 82 extends outward in the tire radial direction from the outer end portion of the first portion 81 in the tire width direction. More specifically, the second portion 82 extends obliquely from the outer end portion of the first portion 81 in the tire width direction outward in the tire radial direction and inward in the tire width direction. An outer end portion of the second portion 82 in the tire radial direction is located outside the first chafer portion 71 in the tire radial direction. The conductive portion 52 is embedded in the second portion 82. As a result, the second portion 82 is connected to the conductive portion 52.

The whole of an outer portion 82a of the second portion 82 in the tire radial direction is located between a portion of the core covering portion 53 extending in the tire radial direction through the inside of the bead core 60 in the tire width direction and a portion of the core covering portion 53 extending in the tire radial direction through the outside of the bead core 60 in the tire width direction, in the tire width direction. More specifically, the outer portion 82a is provided so as to be laminated on the inner surface in the tire width direction of the portion of the carcass ply 51 that is folded outward in the tire radial direction around the bead core 60.

An inner portion 82b of the second portion 82 in the tire radial direction has a base portion (intervening portion) 82c and a penetrating portion (embedded portion) 82d. In the present embodiment, the base portion 82c corresponds to the intervening portion located between the bead core 60 and the carcass ply 51. The base portion 82c is a portion of the inner portion 82b located inside the carcass ply 51 in the tire width direction. In the present embodiment, the penetrating portion 82d corresponds to the embedded portion embedded in the carcass ply 51. More specifically, the penetrating portion 82d corresponds to a second embedded portion embedded in a portion of the carcass ply 51 located outside the bead core 60 in the tire width direction. The penetrating portion 82d penetrates, in the tire width direction, a portion of the carcass rubber 51a located between the ply cords 51b.

As the base portion 82c and the penetrating portion 82d are provided, the inner portion 82b of the second portion 82 in the tire radial direction is disposed so as to penetrate the carcass layer 50 in the tire width direction. An inner end portion of the inner portion 82b in the tire width direction is in contact with the bead core 60. An outer end portion of the inner portion 82b in the tire width direction is connected to the first chafer portion 71. More specifically, the outer end portion of the inner portion 82b in the tire width direction is connected to the widthwise covering portion 73 of the first chafer portion 71. Similar to the first portion 81 shown in Fig. 3, the inner portion 82b penetrates, in the tire width direction, a portion between the ply cords 51b adjacent to each other in the tire circumferential direction to connect the conductive portion 52 and the chafer portion 70 to each other.

The dimension of the inner portion 82b in the tire width direction is larger than the dimension of the outer portion 82a in the tire width direction. The dimension in the tire width direction of the portion of the inner portion 82b located inside the carcass ply 51 in the tire width direction is smaller than the dimension in the tire width direction of the outer portion 82a. The dimension in the tire width direction of the portion of the inner portion 82b located inside the carcass ply 51 in the tire width direction, that is, the dimension in the tire width direction of the base portion 82c which is the intervening portion, becomes smaller toward the inside in the tire radial direction. A boundary portion between the outer portion 82a and the inner portion 82b in the tire radial direction is disposed at substantially the same position, in the tire radial direction, as the outer end portion of the bead core 60 in the tire radial direction.

The third portion 83 is located inside the bead core 60 in the tire width direction. The third portion 83 extends outward in the tire radial direction from the inner end portion of the first portion 81 in the tire width direction. An outer end portion of the third portion 83 in the tire radial direction is located outside the first chafer portion 71 in the tire radial direction. The conductive portion 52 is embedded in the third portion 83. As a result, the third portion 83 is connected to the conductive portion 52.

The whole of an outer portion 83a of the third portion 83 in the tire radial direction is located between a portion of the core covering portion 53 extending in the tire radial direction through the inside of the bead core 60 in the tire width direction and a portion of the core covering portion 53 extending in the tire radial direction through the outside of the bead core 60 in the tire width direction, in the tire width direction. More specifically, the outer portion 83a is provided so as to be laminated on the outer surface in the tire width direction of the portion of the carcass ply 51 extending from the tread portion 11 to the inside of the bead core 60 in the tire width direction.

An inner portion 83b of the third portion 83 in the tire radial direction has a base portion (intervening portion) 83c and a penetrating portion (embedded portion) 83d. In the present embodiment, the base portion 83c corresponds to the intervening portion located between the bead core 60 and the carcass ply 51. The base portion 83c is a portion of the inner portion 83b located outside the carcass ply 51 in the tire width direction. In the present embodiment, the penetrating portion 83d corresponds to the embedded portion embedded in the carcass ply 51. More specifically, the penetrating portion 83d corresponds to the second embedded portion embedded in a portion of the carcass ply 51 located inside the bead core 60 in the tire width direction. The penetrating portion 83d penetrates, in the tire width direction, a portion of the carcass rubber 51a located between the ply cords 51b.

As the base portion 83c and the penetrating portion 83d are provided, the inner portion 83b of the third portion 83 in the tire radial direction is disposed so as to penetrate the carcass layer 50 in the tire width direction. An outer end portion of the inner portion 83b in the tire width direction is in contact with the bead core 60. An inner end portion of the inner portion 83b in the tire width direction is connected to the first chafer portion 71. More specifically, the inner end portion of the inner portion 83b in the tire width direction is connected to the widthwise covering portion 74 of the first chafer portion 71. Similar to the first portion 81 shown in Fig. 3, the inner portion 83b penetrates, in the tire width direction, the portion between the ply cords 51b adjacent to each other in the tire circumferential direction to connect the conductive portion 52 and the chafer portion 70 to each other.

The dimension of the inner portion 83b in the tire width direction is larger than the dimension of the outer portion 83a in the tire width direction. The dimension in the tire width direction of the portion of the inner portion 83b located outside the carcass ply 51 in the tire width direction is smaller than the dimension in the tire width direction of the outer portion 83a. The dimension in the tire width direction of the portion of the inner portion 83b located outside the carcass ply 51 in the tire width direction, that is, the dimension in the tire width direction of the base portion 83c which is the intervening portion, becomes smaller toward the inside in the tire radial direction. A boundary portion between the outer portion 83a and the inner portion 83b in the tire radial direction is disposed at substantially the same position, in the tire radial direction, as the outer end portion of the bead core 60 in the tire radial direction.

As described above, on the outside of the bead core 60 in the tire width direction, the second portion 82 connects the conductive portion 52 and the first chafer portion 71 to each other, and thus, the conductive rubber portion 80 disposed outside the bead core 60 in the tire width direction penetrates the carcass ply 51 in the tire width direction and connects the conductive portion 52 and the chafer portion 70 to each other. Further, on the inside of the bead core 60 in the tire width direction, the third portion 83 connects the conductive portion 52 and the first chafer portion 71 to each other, and thus, the conductive rubber portion 80 disposed inside the bead core 60 in the tire width direction penetrates the carcass ply 51 in the tire width direction and connects the conductive portion 52 and the chafer portion 70 to each other. Further, the conductive rubber portion 80 penetrates, in the tire width direction, the portion of the carcass ply 51 between the ply cords 51b adjacent to each other in the tire circumferential direction to connect the conductive portion 52 and the chafer portion 70 to each other.

In the present embodiment, the dimension of the conductive rubber portion 80 in the tire width direction increases toward the inside in the tire radial direction. That is, the conductive rubber portion 80 has a larger dimension in the tire width direction in the inner portion in the tire radial direction.

As shown in Fig. **1****,** a conductive path CP that releases static electricity from the vehicle is provided in the tire 10 so as to extend from a rim on which the tire 10 is mounted to the ground. The conductive path CP is a path in the tire 10 through which static electricity transmitted from the rim passes, and extends from the second chafer portion 29 to the tread surface portion 11a through the first chafer portion 71, the conductive rubber portion 80, the conductive portion 52, the belt layer 30, the gaps 41 of the belt reinforcing layer 40, the tread under cushion 23, and the antenna rubber 27 in this order. As a result, the static electricity of the vehicle transmitted from the rim can be released from the tread surface portion **11a** to the ground.

As shown in Fig. 2, in the present embodiment, the conductive path CP from the first chafer portion 71 to the conductive portion 52 via the conductive rubber portion 80 includes, for example, a path through which the static electricity flows from the radial covering portion 72 to the conductive portion 52 through the first portion 81, and a path through which the static electricity flows from the widthwise covering portion 73 to the conductive portion 52 through the second portion 82.

Further, as described above, the tread under cushion 23 and the belt layer 30 are connected to each other in the gaps 41 of the belt reinforcing layer 40. Therefore, the static electricity that has flowed from the conductive portion 52 to the belt layer 30 flows from the gaps 41 to the tread under cushion 23.

According to the present invention, the conductive rubber portion 80 conducts electricity between the first surface and the second surface of the carcass ply 51. Therefore, even when the conductivity of the carcass ply 51 is low, the conductive rubber portion 80 allows static electricity from the vehicle to pass from the first side in the thickness direction to the second side in the thickness direction of the carcass ply 51. Therefore, the amount of carbon contained in the carcass rubber 51a of the carcass ply 51 can be reduced to reduce the rolling resistance of the tire 10, and the static electricity of the vehicle can be suitably released to the ground.

Further, according to the present invention, the conductive rubber portion 80 penetrates the first surface and the second surface of the carcass ply 51. Specifically, in the present embodiment, the penetrating portions 85, 82d, and 83d, which are the embedded portion of the conductive rubber portion 80, penetrate the carcass ply 51 in the thickness direction. Therefore, the static electricity from the vehicle flows through the conductive rubber portion 80 (i.e., the penetrating portions 85, 82d, and 83d), and thus, the static electricity from the vehicle can easily flow from the first side in the thickness direction to the second side in the thickness direction of the carcass ply 51.

According to the present embodiment, the penetrating portions 85, 82d, and 83d as the embedded portion of the conductive rubber portion 80 are embedded in the carcass ply 51. That is, a portion of the conductive rubber portion 80 is embedded in the carcass ply 51. Therefore, in the portion of the carcass ply 51 in which the conductive rubber portion 80 is embedded, electricity can easily pass through the conductive rubber portion 80. As a result, even when the conductivity of the carcass ply 51 is low, static electricity from the vehicle can pass through the carcass ply 51 by the conductive rubber portion 80. Therefore, it is possible to obtain the tire 10 having a structure that allows static electricity from the vehicle to be easily released to the ground, regardless of the conductivity of the carcass ply 51. Accordingly, the amount of carbon contained in the carcass rubber 51a of the carcass ply 51 can be reduced to reduce the rolling resistance of the tire 10, and the static electricity of the vehicle can be suitably released to the ground.

Further, according to the present embodiment, the penetrating portion 85, which is the first embedded portion, is embedded in a portion of the carcass ply 51 located inside the bead core 60 in the tire radial direction. Therefore, the portion of the carcass ply 51 in which the conductive rubber portion 80 is embedded can be easily brought into contact with the chafer portion 70. As a result, the static electricity from the vehicle, which has been transmitted from the rim to the chafer portion 70, can easily pass through the carcass ply 51 by the conductive rubber portion 80 (i.e., the penetrating portion 85). Therefore, the static electricity from the vehicle can be more suitably released to the ground. In the present embodiment, the penetrating portion 85, which is the first embedded portion, is in contact with the radial covering portion 72.

Further, according to the present embodiment, the penetrating portion 82d, which is the second embedded portion, is embedded in a portion of the carcass ply 51 located outside the bead core 60 in the tire width direction. Therefore, the portion of the carcass ply 51 in which the conductive rubber portion 80 is embedded can be easily brought into contact with the widthwise covering portion 73 of the first chafer portion 71. As a result, the static electricity from the vehicle, which has been transmitted from the rim to the chafer portion 70, can easily pass through the carcass ply 51 by the conductive rubber portion 80 (i.e., the penetrating portion 82d). Therefore, the static electricity from the vehicle can be more suitably released to the ground.

Further, according to the present embodiment, the penetrating portion 83d, which is the second embedded portion, is embedded in a portion of the carcass ply 51 located inside the bead core 60 in the tire width direction. Therefore, the portion of the carcass ply 51 in which the conductive rubber portion 80 is embedded can be easily brought into contact with the widthwise covering portion 74 of the first chafer portion 71. As a result, the static electricity from the vehicle, which has been transmitted from the rim to the chafer portion 70, can easily pass through the carcass ply 51 by the conductive rubber portion 80 (i.e., the penetrating portion 83d). Therefore, the static electricity from the vehicle can be more suitably released to the ground.

Further, according to the present embodiment, the penetrating portions 85, 82d, and 83d, which are the embedded portion, are located between the ply cords 51b adjacent to each other in the tire circumferential direction. Therefore, it is easy to embed and dispose a portion of the conductive rubber portion 80 in the carcass ply 51. Further, the penetrating portions 85, 82d and 83d can easily penetrate the carcass ply 51 to be disposed, and the conductive portion 52 and the chafer portion 70 are more suitably connected to each other by the conductive rubber portion 80.

Further, according to the present embodiment, at least a portion of the conductive rubber portion 80 is provided on an inner side in the tire radial direction than the outer end portion of the bead core 60 in the tire radial direction. Therefore, the static electricity from the vehicle, which has been transmitted from the rim to the chafer portion 70, can easily pass through the carcass ply 51 by the conductive rubber portion 80.

Further, according to the present embodiment, the conductive portion 52 extending along the carcass ply 51 and at least partially located between the carcass ply 51 and the bead core 60 is provided. Further, the conductive portion 52 is connected to the conductive rubber portion 80 via the base portions 84, 82c, and 83c. Therefore, the static electricity transmitted to the conductive rubber portion 80 can be transmitted to the conductive portion 52. As a result, even when the volume resistivity of the carcass rubber 51a in the carcass ply 51 is relatively large and the conductivity of the carcass ply 51 is low, the static electricity from the vehicle, which has been transmitted from the rim to the chafer portion 70, can be transmitted to the conductive portion 52 via the conductive rubber portion 80. Accordingly, the static electricity from the vehicle can be transferred to the tread portion 11 via the conductive portion 52, and the static electricity can be released from the tread surface portion 11a of the tread portion 11 to the ground. Therefore, the static electricity from the vehicle can be more suitably released to the ground.

Further, according to the present embodiment, the volume resistivity of the conductive portion 52 is smaller than the volume resistivity of the conductive rubber portion 80. Therefore, it is easy to suitably reduce the volume resistivity of the conductive portion 52. As a result, the static electricity can suitably flow to the conductive portion 52 that forms a relatively long conductive path CP from the bead portion 13 to the tread portion 11. Therefore, the static electricity from the vehicle can be more suitably released to the ground.

Further, according to the present embodiment, the conductive portion 52 is a thread member containing a metal. Therefore, it is easy to reduce the volume resistivity of the conductive portion 52 more suitably, and the conductive portion 52 makes it easier for the static electricity to flow from the bead portion 13 to the tread portion 11. Accordingly, the static electricity from the vehicle can be more suitably released to the ground. Further, according to the present embodiment, the plurality of conductive portions 52 are disposed at intervals in the tire circumferential direction. Therefore, it is possible to increase the conductive path CP that allows static electricity to flow from the bead portion 13 to the tread portion **11,** and the conductive portion 52 makes it easier for the static electricity to flow from the bead portion 13 to the tread portion 11. Therefore, the static electricity from the vehicle can be more suitably released to the ground.

Further, according to the present embodiment, the conductive rubber portion 80 connects the conductive portion 52 and the first chafer portion 71 to each other. The first chafer portion 71 covers a portion of the carcass ply 51 provided in the bead portion 13 from the inside in the tire radial direction and from both sides in the tire width direction. Therefore, the configuration is easily adopted, in which the conductive rubber portion 80 is disposed on the inside of the bead core 60 in the tire radial direction and on both sides of the bead core 60 in the tire width direction and penetrates the carcass ply 51 to connect the conductive portion 52 and the chafer portion 70 to each other. That is, as in the present embodiment, the radial covering portion 72 and the conductive portion 52 are easily connected by the first portion 81 of the conductive rubber portion 80, and the widthwise covering portions 73 and 74 and the conductive portion 52 are easily connected by the second portion 82 and the third portion 83 of the conductive rubber portion 80.

Further, according to the present embodiment, the conductive rubber portion 80 has the base portions 84, 82c, and 83c as the intervening portions located between the bead core 60 and the carcass ply 51. Therefore, the conductive rubber portion 80 is easily connected to the conductive portion 52 via the base portions 84, 82c, and 83c. As a result, the static electricity can be suitably transmitted from the conductive rubber portion 80 to the conductive portion 52. Therefore, the static electricity from the vehicle can be more suitably released to the ground.

Further, according to the present embodiment, the conductive rubber portion 80 has a larger dimension in the tire width direction in the inner portion in the tire radial direction. Therefore, a portion of the inner end portion of the conductive rubber portion 80 in the tire radial direction, which is connected to the chafer portion 70, can be enlarged in the tire width direction. As a result, the conductive rubber portion 80 can be more suitably connected to the chafer portion 70, and the static electricity can easily flow from the chafer portion 70 to the conductive portion 52 via the conductive rubber portion 80. Therefore, the static electricity from the vehicle can be more suitably released to the ground.

Further, according to the present embodiment, the carcass rubber 51a is relatively difficult to conduct electricity. Therefore, it is difficult for the static electricity from the vehicle to pass through the carcass ply 51. However, as described above, according to the present embodiment, the static electricity from the vehicle is easily released to the ground regardless of the conductivity of the carcass ply 51. That is, the effect that the static electricity is easily released to the ground regardless of the conductivity of the carcass ply 51 described above can be obtained more usefully in a configuration in which the carcass rubber 51a is relatively difficult to conduct electricity.

Further, according to the present embodiment, the conductive rubber portion 80 is disposed outside the bead core 60 in the tire width direction and penetrates the carcass ply 51 in the tire width direction to connect the conductive portion 52 and the chafer portion 70 to each other. Therefore, in addition to the connection between the conductive portion 52 and the chafer portion 70 inside the bead core 60 in the tire radial direction, the conductive portion 52 and the chafer portion 70 can be connected to each other outside the bead core 60 in the tire width direction by the conductive rubber portion 80. As a result, a connection area between the chafer portion 70 and the conductive portion 52 via the conductive rubber portion 80 can increase, and the static electricity from the chafer portion 70 can more suitably flow to the conductive portion 52 via the conductive rubber portion 80. Therefore, the static electricity from the vehicle can be more suitably released to the ground.

Further, according to the present embodiment, the conductive rubber portion 80 is disposed inside the bead core 60 in the tire width direction and penetrates the carcass ply 51 in the tire width direction to connect the conductive portion 52 and the chafer portion 70 to each other. Therefore, the conductive rubber portion 80 disposed on the inside of the bead core 60 in the tire radial direction and on both sides of the bead core 60 in the tire width direction penetrates the carcass ply 51 to connect the conductive portion 52 and the chafer portion 70 to each other. As a result, the connection area between the chafer portion 70 and the conductive portion 52 via the conductive rubber portion 80 can increase, and the static electricity from the chafer portion 70 can more suitably flow to the conductive portion 52 via the conductive rubber portion 80. Therefore, the static electricity from the vehicle can be more suitably released to the ground.

The scope of the present invention is not limited to the above embodiments, and the following configurations can also be adopted whilst falling within the scope of the appended claims.

The conductive rubber portion is not particularly limited as long as it has the embedded portion embedded in the carcass ply and has conductivity. The conductive rubber portion may not be connected to the conductive portion. The conductive rubber portion may not be connected to the chafer portion. As long as the embedded portion is embedded in the carcass ply, the position where the embedded portion is provided is not particularly limited. The embedded portion may not penetrate the carcass ply. The embedded portion may not be exposed on the surface of the carcass layer. The embedded portion may not be connected to the intervening portion. The intervening portion may not be provided.

The conductive rubber portion may not penetrate the carcass ply in the tire width direction. That is, for example, in the above-described embodiment, the conductive rubber portion 80 may not have the second portion 82 and the third portion 83. The shape of the conductive rubber portion is not particularly limited. The conductive rubber portion may not have a large dimension in the tire width direction in the inner portion in the tire radial direction.

Further, the conductive rubber portion may be a portion of the carcass rubber in the carcass ply. In this case, the carcass rubber has a first rubber portion and a second rubber portion having volume resistivity smaller than that of the first rubber portion. The second rubber portion is a portion corresponding to the conductive rubber portion. The first rubber portion is a portion of the carcass rubber other than the second rubber portion. In this case as well, as described above, the static electricity from the vehicle can be easily released to the ground regardless of the conductivity of the carcass ply.

The conductive portion is not particularly limited as long as it extends along the carcass ply, and at least a portion thereof is located between the carcass ply and the bead core and has conductivity. The conductive portion may not contain metal. The conductive portion may be made of, for example, a conductive rubber. The conductive portion may not be a thread member, and may be a layered member laminated on the carcass ply. The volume resistivity of the conductive portion may be the same as the volume resistivity of the conductive rubber portion, or may be larger than the volume resistivity of the conductive rubber portion. The conductive portion may not be provided.

The chafer portion is not particularly limited as long as it has conductivity and covers at least a portion around the carcass ply. For example, in the above-described embodiment, the first chafer portion 71 may not have either or both of the widthwise covering portions 73 and 74. When the first chafer portion 71 does not have the widthwise covering portion 73, for example, the first chafer portion 71 is connected to the second chafer portion 29 at the outer end portion of the radial covering portion 72 in the tire width direction. The first chafer portion and the second chafer portion may be integrally molded. The chafer portion may not be provided.

The carcass layer may have two or more carcass plies. In this case, the conductive rubber portion penetrates the plurality of carcass plies in the tire radial direction to connect the chafer portion and the conductive portion to each other. The carcass layer may have an inner liner attached to the inner surface of the carcass ply.

The configuration of the tread portion is not particularly limited as long as static electricity can flow from the conductive portion, which extends to the tread portion, to the tread surface portion.

The tire of the above-described embodiment may be used in any vehicle.

The configurations described in the present specification can be appropriately combined within a range that does not contradict each other.

According to one aspect of the tire of the present invention, the conductive rubber portion conducts electricity between a first surface and a second surface of the carcass ply. Therefore, even when the conductivity of the carcass ply is low, the conductive rubber portion allows static electricity from a vehicle to pass from a first side in the thickness direction to a second side in the thickness direction of the carcass ply. Therefore, the amount of carbon contained in the carcass rubber of the carcass ply can be reduced to reduce the rolling resistance of the tire, and the static electricity of the vehicle can be suitably released to the ground.

The conductive rubber portion penetrates the first surface and the second surface of the at least one carcass ply.

According to this configuration, the static electricity from the vehicle flows through the conductive rubber portion, and thus, the static electricity from the vehicle can easily flow from the first side in the thickness direction to the second side in the thickness direction of the carcass ply.

The conductive rubber portion may include an embedded portion embedded in the carcass ply.

According to this configuration, a portion of the conductive rubber portion is embedded in the carcass ply. Therefore, in the portion of the carcass ply in which the conductive rubber portion is embedded, electricity can easily pass through the conductive rubber portion. As a result, even when the conductivity of the carcass ply is low, static electricity from the vehicle can pass through the carcass ply by the conductive rubber portion. Therefore, it is possible to obtain a tire having a structure that allows the static electricity from the vehicle to be easily released to the ground, regardless of the conductivity of the carcass ply. Accordingly, the amount of carbon contained in the carcass rubber of the carcass ply can be reduced to reduce the rolling resistance of the tire, and the static electricity of the vehicle can be suitably released to the ground.

The embedded portion may include a first embedded portion embedded in a portion of the carcass ply located inside the bead core in the tire radial direction.

According to this configuration, the portion of the carcass ply in which the conductive rubber portion is embedded, that is, the portion in which the first embedded portion is embedded can be easily brought into contact with the chafer portion. As a result, the static electricity from the vehicle, which has been transmitted from the rim to the chafer portion, can easily pass through the carcass ply by the first embedded portion. Therefore, the static electricity from the vehicle can be more suitably released to the ground.

The embedded portion may include a second embedded portion embedded in a portion of the carcass ply located on one side of the bead core in the tire width direction.

According to this configuration, the portion of the carcass ply in which the conductive rubber portion is embedded, that is, the portion in which the second embedded portion is embedded can be easily brought into contact with the chafer portion. As a result, the static electricity from the vehicle, which has been transmitted from the rim to the chafer portion, can easily pass through the carcass ply by the second embedded portion. Therefore, the static electricity from the vehicle can be more suitably released to the ground.

The embedded portion may penetrate the carcass ply in the thickness direction of the carcass ply.

According to this configuration, the static electricity from the vehicle flows through the conductive rubber portion (the embedded portion), and thus, the static electricity from the vehicle can easily flow from the first side in the thickness direction to the second side in the thickness direction of the carcass ply.

The carcass ply may include a carcass rubber and a plurality of ply cords embedded in the carcass rubber and disposed at intervals in the tire circumferential direction, and the embedded portion may be located between the ply cords.

According to this configuration, it is easy to embed and dispose a portion of the conductive rubber portion in the carcass ply. Further, the embedded portion can easily penetrate the carcass ply to be disposed, and the conductive portion and the chafer portion are more suitably connected to each other by the conductive rubber portion.

At least a portion of the conductive rubber portion may be provided on an inner side in the tire radial direction than an outer end portion of the bead core in the tire radial direction.

According to this configuration, the static electricity from the vehicle, which has been transmitted from the rim to the chafer portion, can easily pass through the carcass ply by the conductive rubber portion.

A conductive portion extending along the carcass ply and at least partially located between the carcass ply and the bead core may be provided, and the conductive portion may be connected to the conductive rubber portion.

According to this configuration, the static electricity transmitted to the conductive rubber portion can be transmitted to the conductive portion. As a result, even when the volume resistivity of the carcass rubber in the carcass ply is relatively large and the conductivity of the carcass ply is low, the static electricity from the vehicle, which has been transmitted from the rim to the chafer portion, can be transmitted to the conductive portion via the conductive rubber portion. As a result, the static electricity from the vehicle can be transferred to the tread portion via the conductive portion, and the static electricity can be released from the tread surface portion of the tread portion to the ground. Therefore, the static electricity from the vehicle can be more suitably released to the ground.

The volume resistivity of the conductive portion may be smaller than the volume resistivity of the conductive rubber portion.

According to this configuration, it is easy to suitably reduce the volume resistivity of the conductive portion. As a result, the static electricity can suitably flow to the conductive portion that forms a relatively long conductive path CP from the bead portion to the tread portion. Therefore, the static electricity from the vehicle can be more suitably released to the ground.

The conductive portion may be a thread member containing a metal.

According to this configuration, it is easy to reduce the volume resistivity of the conductive portion more suitably, and the conductive portion makes it easier for the static electricity to flow from the bead portion to the tread portion. Accordingly, the static electricity from the vehicle can be more suitably released to the ground.

A chafer portion having conductivity and covering at least a portion around the carcass ply may be provided, the chafer portion may include a first chafer portion that covers a portion of the carcass ply provided in the bead portion from an inside in the tire radial direction and from both sides in the tire width direction, and a second chafer portion that covers the portion of the carcass ply provided in the bead portion from an outside in the tire width direction and is connected to the first chafer portion, and the conductive rubber portion may connect the conductive portion and the first chafer portion to each other.

According to this configuration, a configuration is easily adopted, in which the conductive rubber portion is disposed on the inside of the bead core in the tire radial direction and on both sides of the bead core in the tire width direction and penetrates the carcass ply to connect the conductive portion and the chafer portion to each other.

The conductive rubber portion may have a configuration in which the dimension in the tire width direction is large in an inner portion in the tire radial direction.

According to this configuration, a portion of the inner end portion of the conductive rubber portion in the tire radial direction, which is connected to the chafer portion, can be enlarged in the tire width direction. As a result, the conductive rubber portion can be more suitably connected to the chafer portion, and the static electricity can easily flow from the chafer portion to the conductive portion via the conductive rubber portion. Therefore, the static electricity from the vehicle can be more suitably released to the ground.

According to another aspect of the present disclosure, not falling within the scope of the appended claims but included to aid understanding of the invention, a tire includes a bead core provided in the bead portion, and a carcass ply covering at least a portion around the bead core, in which the carcass ply includes a carcass rubber, and the carcass rubber includes a first rubber portion, and a second rubber portion having volume resistivity smaller than that of the first rubber portion.

According to another aspect of the tire of the present disclosure, similar to the above description, it is possible to obtain a tire having a structure that allows static electricity from a vehicle to be easily released to the ground, regardless of the conductivity of the carcass ply. Accordingly, the amount of carbon contained in the carcass rubber of the carcass ply can be reduced to reduce the rolling resistance of the tire, and the static electricity of the vehicle can be suitably released to the ground.

### [Industrial Applicability]

By applying a tire of the present application to the present field, it is possible to provide a tire having a structure in which static electricity from a vehicle is easily released to the ground regardless of conductivity of a carcass ply.

### [Reference Signs List]

10: Tire
13: Bead portion
29: Second chafer portion
51: Carcass ply
51a: Carcass rubber
51b: Ply cord
52: Conductive portion
60: Bead core

## Claims

1. A tire (10) including a tread portion (11), a sidewall portion (12), and a bead portion (13), the tire comprising:
a bead core (60) provided in the bead portion;
at least one carcass ply (51) provided along at least a portion of the bead core around a core axis of the bead core; and
a conductive rubber portion (80) provided between the carcass ply and the bead core,
wherein the conductive rubber portion conducts electricity between a first surface and a second surface of the at least one carcass ply;
**characterised in that** the conductive rubber portion penetrates the first surface and the second surface of the at least one carcass ply.

2. The tire (10) according to Claim 1,
wherein the conductive rubber portion includes an embedded portion (85, 82d, 83c) embedded in the carcass ply.

3. The tire (10) according to Claim 2,
wherein the embedded portion includes a first embedded portion (85) embedded in a portion of the carcass ply located inside the bead core in a tire radial direction.

4. The tire (10) according to Claim 2 or 3,
wherein the embedded portion includes a second embedded portion (82d, 83c) embedded in a portion of the carcass ply located on one side of the bead core in a tire width direction.

5. The tire (10) according to any one of Claims 2 to 4,
wherein the embedded portion penetrates the carcass ply in a thickness direction of the carcass ply.

6. The tire (10) according to any one of Claims 2 to 5,
wherein the carcass ply includes
a carcass rubber (51a), and
a plurality of ply cords (51b) embedded in the carcass rubber and disposed at intervals in a tire circumferential direction, and
the embedded portion is located between the ply cords.

7. The tire (10) according to any one of Claims 1 to 6,
wherein at least a portion of the conductive rubber portion is provided on an inner side in a tire radial direction than an outer end portion of the bead core in the tire radial direction.

8. The tire (10) according to any one of Claims 1 to 7, further comprising a conductive portion (52) extending along the carcass ply and at least partially located between the carcass ply and the bead core,
wherein the conductive portion is connected to the conductive rubber portion.

9. The tire (10) according to Claim 8,
wherein a volume resistivity of the conductive portion is smaller than a volume resistivity of the conductive rubber portion.

10. The tire (10) according to Claim 9,
wherein the conductive portion is a thread member containing a metal.

11. The tire (10) according to any one of Claims 8 to 10, further comprising a chafer portion (70) having conductivity and covering at least a portion around the carcass ply,
wherein the chafer portion includes:
a first chafer portion (71) that covers a portion of the carcass ply provided in the bead portion from an inside in a tire radial direction and from both sides in a tire width direction; and
a second chafer portion (29) that covers the portion of the carcass ply provided in the bead portion from an outside in the tire width direction and is connected to the first chafer portion, and
the conductive rubber portion connects the conductive portion and the first chafer portion to each other.

12. The tire (10) according to any one of Claims 1 to 11,
wherein a dimension of the conductive rubber portion in a tire width direction increases towards an inside in a tire radial direction.

## Patentansprüche

1. Reifen (10), der einen Laufflächenabschnitt (11), einen Seitenwandabschnitt (12) und einen Wulstabschnitt (13) einschließt, wobei der Reifen Folgendes umfasst:
einen Wulstkern (60), der in dem Wulstabschnitt bereitgestellt wird,
mindestens eine Karkassenlage (51), die entlang mindestens eines Abschnitts des Wulstkerns um eine Kernachse des Wulstkerns bereitgestellt wird, und
einen leitfähigen Gummiabschnitt (80), der zwischen der Karkassenlage und dem Wulstkern bereitgestellt wird,
wobei der leitfähige Gummiabschnitt Elektrizität zwischen einer ersten Oberfläche und einer zweiten Oberfläche der mindestens einen Karkassenlage leitet,
**dadurch gekennzeichnet, dass** der leitfähige Gummiabschnitt die erste Oberfläche und die zweite Oberfläche der mindestens einen Karkassenlage durchdringt.

2. Reifen (10) nach Anspruch 1,
wobei der leitfähige Gummiabschnitt einen eingebetteten Abschnitt (85, 82d, 83c) einschließt, der in der Karkassenlage eingebettet ist.

3. Reifen (10) nach Anspruch 2,
wobei der eingebettete Abschnitt einen ersten eingebetteten Abschnitt (85) einschließt, der in einem Abschnitt der Karkassenlage eingebettet ist, der sich in einer Reifenradialrichtung nach innen von dem Wulstkern befindet.

4. Reifen (10) nach Anspruch 2 oder 3,
wobei der eingebettete Abschnitt einen zweiten eingebetteten Abschnitt (82d, 83c) einschließt, der in einem Abschnitt der Karkassenlage eingebettet ist, der sich in einer Reifenbreitenrichtung auf einer Seite des Wulstkerns befindet.

5. Reifen (10) nach einem der Ansprüche 2 bis 4,
wobei der eingebettete Abschnitt die Karkassenlage in einer Dickenrichtung der Karkassenlage durchdringt.

6. Reifen (10) nach einem der Ansprüche 2 bis 5,
wobei die Karkassenlage Folgendes einschließt:
einen Karkassengummi (51a) und
eine Vielzahl von Lagenkords (51b), die in dem Karkassengummi eingebettet sind und in Abständen in einer Reifenumfangsrichtung angeordnet sind, und
wobei der eingebettete Abschnitt zwischen den Lagenkords angeordnet ist.

7. Reifen (10) nach einem der Ansprüche 1 bis 6,
wobei mindestens ein Abschnitt des leitfähigen Gummiabschnitts auf einer in einer Reifenradialrichtung weiter inneren Seite als ein in der Reifenradialrichtung äußerer Endabschnitt des Wulstkerns bereitgestellt wird.

8. Reifen (10) nach einem der Ansprüche 1 bis 7, der ferner einen leitfähigen Abschnitt (52) umfasst, der sich entlang der Karkassenlage erstreckt und sich mindestens teilweise zwischen der Karkassenlage und dem Wulstkern befindet,
wobei der leitfähige Abschnitt mit dem leitfähigen Gummiabschnitt verbunden ist.

9. Reifen (10) nach Anspruch 8,
wobei ein spezifischer Durchgangswiderstand des leitfähigen Abschnitts kleiner ist als ein spezifischer Durchgangswiderstand des leitfähigen Gummiabschnitts.

10. Reifen (10) nach Anspruch 9,
wobei der leitfähige Abschnitt ein Fadenelement ist, das ein Metall enthält.

11. Reifen (10) nach einem der Ansprüche 8 bis 10, der ferner einen Wulstschutzband-Abschnitt (70) umfasst, der eine Leitfähigkeit aufweist und mindestens einen Abschnitt um die Karkassenlage abdeckt,
wobei der Wulstschutzband-Abschnitt Folgendes einschließt:
einen ersten Wulstschutzband-Abschnitt (71), der einen Abschnitt der Karkassenlage, der in dem Wulstabschnitt bereitgestellt wird, von einer Innenseite in einer Reifenradialrichtung und von beiden Seiten in einer Reifenbreitenrichtung abdeckt, und
einen zweiten Wulstschutzband-Abschnitt (29), der den Abschnitt der Karkassenlage, der in dem Wulstabschnitt bereitgestellt wird, von einer Außenseite in der Reifenradialrichtung abdeckt und mit dem ersten Wulstschutzband-Abschnitt verbunden ist, und
wobei der leitfähige Gummiabschnitt den leitfähigen Abschnitt und den ersten Wulstschutzband-Abschnitt miteinander verbindet.

12. Reifen (10) nach einem der Ansprüche 1 bis 11,
wobei eine Abmessung des leitfähigen Gummiabschnitts in einer Reifenbreitenrichtung hin zu einer Innenseite in einer Reifenradialrichtung zunimmt.

## Revendications

1. Pneumatique (10), incluant une partie de bande de roulement (11), une partie de flanc (12) et une partie de talon (13), le pneumatique comprenant :
une tringle (60) fournie dans la partie de talon ;
au moins une nappe de carcasse (51) fournie le long d'au moins une partie de la tringle autour d'un axe central de la tringle ; et
une partie de caoutchouc conducteur (80) fournie entre la nappe de carcasse et la tringle ;
dans lequel la partie de caoutchouc conducteur conduit l'électricité entre une première surface et une deuxième surface de l'au moins une nappe de carcasse ;
**caractérisé en ce que** la partie de caoutchouc conducteur pénètre dans la première surface et dans la deuxième surface de l'au moins une nappe de carcasse.

2. Pneumatique (10) selon la revendication 1,
dans lequel la partie de caoutchouc conducteur inclut une partie encastrée (85, 82d, 83c) encastrée dans la nappe de carcasse.

3. Pneumatique (10) selon la revendication 2,
dans lequel la partie encastrée inclut une première partie encastrée (85), encastrée dans une partie de la nappe de carcasse disposée à l'intérieur de la tringle, dans une direction radiale du pneumatique.

4. Pneumatique (10) selon les revendications 2 ou 3,
dans lequel la partie encastrée inclut une deuxième partie encastrée (82d, 83c), encastrée dans une partie de la nappe de carcasse disposée sur un côté de la tringle, dans la direction de la largeur du pneumatique.

5. Pneumatique (10) selon l'une quelconque des revendications 2 à 4,
dans lequel la partie encastrée pénètre dans la nappe de carcasse dans une direction de l'épaisseur de la nappe de carcasse.

6. Pneumatique (10) selon l'une quelconque des revendications 2 à 5,
dans lequel la nappe de carcasse inclut :
une gomme de carcasse (51a) ; et
une pluralité de câblés de nappe (51b) encastrés dans la gomme de carcasse et disposées à des intervalles dans la direction circonférentielle du pneumatique ; et
la partie encastrée étant disposée entre les câblés de nappe.

7. Pneumatique (10) selon l'une quelconque des revendications 1 à 6,
dans lequel au moins une partie de la partie de caoutchouc conducteur est fournie sur un côté plus interne, dans la direction radiale du pneumatique, qu'une partie d'extrémité externe de la tringle, dans la direction radiale du pneumatique.

8. Pneumatique (10) selon l'une quelconque des revendications 1 à 7, comprenant en outre une partie conductrice (52) s'étendant le long de la nappe de carcasse et disposée au moins partiellement entre la nappe de carcasse et la tringle ;
dans lequel la partie conductrice est reliée à la partie de caoutchouc conducteur.

9. Pneumatique (10) selon la revendication 8,
dans lequel une résistivité transversale de la partie conductrice est inférieure à une résistivité transversale de la partie de caoutchouc conducteur.

10. Pneumatique (10) selon la revendication 9,
dans lequel la partie conductrice est un élément fileté contenant un métal.

11. Pneumatique (10) selon l'une quelconque des revendications 8 à 10, comprenant en outre une partie de bandelette talon (70) présentant une conductivité et recouvrant au moins une partie autour de la nappe de carcasse ;
dans lequel la partie de bandelette talon inclut :
une première partie de bandelette talon (71) qui recouvre une partie de la nappe de carcasse fournie dans la partie de talon, à partir d'un intérieur, dans une direction radiale du pneumatique, et à partir des deux côtés, dans une direction de la largeur du pneumatique ; et
une deuxième partie de bandelette talon (29) qui recouvre la partie de la nappe de carcasse disposée dans la partie de talon, à partir d'un extérieur, dans la direction de la largeur du pneumatique, et est reliée à la première partie de bandelette talon ; et
la partie de caoutchouc conducteur reliant la partie conductrice et la première partie de bandelette talon l'une avec l'autre.

12. Pneumatique (10) selon l'une quelconque des revendications 1 à 11,
dans lequel une dimension de la partie de caoutchouc conducteur, dans une direction de la largeur du pneumatique, augmente vers un intérieur, dans une direction radiale du pneumatique.
